# EUROPEAN PATENT APPLICATION

(11) **EP 4 633 219 A1**
(43) Date of publication of application: **15.10.2025**
(21) Application number: 24196575.5
(22) Date of filing: 27.08.2024
(51) Int. Cl.: H04W 12/50, H04H 60/23, H04L 9/08, H04L 9/40

(54) **DATA PROCESSING METHOD AND APPARATUS, ELECTRONIC DEVICE, STORAGE MEDIUM AND COMPUTER PROGRAM PRODUCT**

(30) Priority: 09.04.2024 CN 202410425035
(71) Applicant: Beijing Xiaomi Mobile Software Co., Ltd., Beijing 100085 (CN)
(72) Inventor: WU, Jia, Beijing, 100085 (CN)
(74) Representative: Dehns Germany Partnerschaft mbB

(57) **Abstract**

The present disclosure is related to a data processing method and apparatus, an electronic device, a storage medium and a computer program product. The method includes: in response to that a password acquisition request sent by a listening device is received, acquiring first key information and a random code from a broadcasting device based on a first communication connection with the broadcasting device; obtaining a second check code based on the first key information and the random code; checking a first check code acquired from the broadcasting device and the second check code to obtain a check result; in response to that the check result indicates that check is passed, acquiring password information from the broadcasting device; and sending the password information to the listening device, the password information being used for the listening device to decrypt broadcast audio received from the broadcasting device.

## Description

### TECHNICAL FIELD

The present disclosure relates to the field of data processing, and in particular to a data processing method and apparatus, an electronic device, a storage medium and a computer program product.

### BACKGROUND

As Bluetooth low energy audio technologies become increasingly popular, the Bluetooth protocol international standardization organization has proposed a connectionless audio broadcast technology, which allows Bluetooth headsets to listen to music without connecting to a Bluetooth audio source device that plays audio, greatly improving the flexibility of listening to audio. All major mobile phone manufacturers and headset manufacturers support Bluetooth low energy audio broadcast technology.

According to the published Bluetooth technology protocol standard(s), in a Bluetooth audio broadcasting scenario, an audio broadcasting device sends two types of air interface packets, one of which is an audio broadcasting data packet carrying audio data, and the other is an extended broadcasting packet used to describe auxiliary information such as on which channel and at which time point the audio broadcasting data packet(s) will be transmitted. Broadcast listening devices such as headsets, or speakers may scan and listen to these audio broadcasting data packets. Since broadcast listening devices usually lack a display interface for interaction with users, users need to operate on a display interface of Bluetooth auxiliary scan devices such as mobile phones connected to the broadcast listening devices to select a target audio broadcasting device they want to listen to. In a scenario where an audio broadcasting device encrypts and transmits audio broadcasting data packet(s), a broadcast listening device will request a corresponding broadcast password from a Bluetooth auxiliary scan device. After receiving the password request, the Bluetooth auxiliary scan device pops up a corresponding display interface for a user to enter the password, and then sends the password entered by the user to the broadcast listening device. The password usually includes English characters and numbers, and the maximum length can be set to 16 characters. For users, manually entering multiple characters is not a simple operation. Users need to manually enter the password for a long time, which is inconvenient and results in a poor user experience.

### SUMMARY

In order to overcome the problem(s) existing in the related art, the present disclosure provides a data processing method and apparatus, an electronic device, a storage medium and a computer program product to solve the problem of poor user experience in the scenario of listening to encrypted broadcast audio.

According to a first aspect of embodiments of the present disclosure, there is provided a data processing method, including:
in a case where a password acquisition request sent by a listening device is received, acquiring first key information and a random code from a broadcasting device based on a first communication connection with the broadcasting device;
obtaining a second check code based on the first key information and the random code;
checking a first check code acquired from the broadcasting device and the second check code to obtain a check result, wherein the first check code is obtained by the broadcasting device based on the first key information and the random code;
in a case where the check result indicates that check is passed, acquiring password information from the broadcasting device; and
sending the password information to the listening device, wherein the password information is used for the listening device to decrypt broadcast audio received from the broadcasting device.

According to a second aspect of embodiments of the present disclosure, there is further provided a data processing method, including:
based on a first communication connection with a terminal device that receives a password acquisition request from a listening device, sending first key information and a random code to the terminal device;
obtaining a first check code based on the first key information and the random code, and sending the first check code to the terminal device;
in a case where a check result obtained by the terminal device by checking the first check code and a second check code indicates that check is passed, sending password information to the terminal device, so that the terminal device sends the password information to the listening device, wherein the second check code is obtained by the terminal device based on the first key information and the random code, and the password information is used for the listening device to decrypt broadcast audio received from a broadcasting device.

According to a third aspect of embodiments of the present disclosure, there is further provided a data processing method, including:
sending a password acquisition request to a terminal device, wherein the password acquisition request is used to indicate the terminal device to obtain first key information and a random code from a broadcasting device based on a first communication connection between the terminal device and the broadcasting device;
receiving password information sent by the terminal device, wherein the password information is obtained from the broadcasting device in a case where a check result obtained by the terminal device by checking a first check code and a second check code indicates that check is passed, the first check code is obtained by the terminal device based on the first key information and the random code, and the second check code is obtained by the broadcasting device based on the first key information and the random code; and
decrypting broadcast audio received from the broadcasting device based on the password information to obtain audio to be played.

According to a further aspect of embodiments of the present disclosure, there is provided an electronic device, including:
a processor;
a memory storing a computer program or instruction;
wherein the processor is configured to execute the computer program or instruction to implement the steps of the method according to any one of the first to third aspects.

According to a further aspect of embodiments of the present disclosure, there is provided a non-transitory computer-readable storage medium storing a computer program or instruction, wherein when the computer program or instruction in the storage medium is executed by a processor, the steps of the method according to any one of first to third aspects are implemented.

According to a further aspect of embodiments of the present disclosure, there is provided a computer program product, including a computer program or instruction, wherein when the computer program or instruction is executed by a processor, the steps of the method according to any one of first to third aspects are implemented.

It is to be understood that the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of the specification, illustrate embodiments consistent with the present disclosure and, together with the specification, serve to explain the principles of the present disclosure.
FIG. 1 is a flowchart showing a data processing method according to an example embodiment.
FIG. 2 is a flowchart showing another data processing method according to an example embodiment.
FIG. 3 is a flowchart showing another data processing method according to an example embodiment.
FIG. 4 is a diagram showing an existing application scenario of listening to encrypted broadcast audio.
FIG. 5 is a diagram showing an application scenario of listening to encrypted broadcast audio according to an example embodiment.
FIG. 6 is a timing diagram showing interactions between a terminal device and a broadcasting device when check is passed according to an example embodiment.
FIG. 7 is a timing diagram showing interactions between a terminal device and a broadcasting device when check fails according to an example embodiment.
FIG. 8 is a block diagram showing a data processing apparatus according to an example embodiment.
FIG. 9 is a block diagram showing another data processing apparatus according to an example embodiment.
FIG. 10 is a block diagram showing another data processing apparatus according to an example embodiment.
FIG. 11 is a structural block diagram of an apparatus 1100 according to an example embodiment.
FIG. 12 is a block diagram showing an apparatus 1200 for data processing according to an example embodiment.

### DETAILED DESCRIPTION

Example embodiments will be described in detail herein, examples of which are shown in the accompanying drawings. When the following description refers to the drawings, the same numbers in different drawings represent the same or similar elements unless otherwise indicated. The embodiments described in the following example embodiments do not represent all embodiments consistent with the present disclosure. Instead, they are merely examples of apparatuses and methods consistent with some aspects of the present disclosure as detailed in the appended claims.

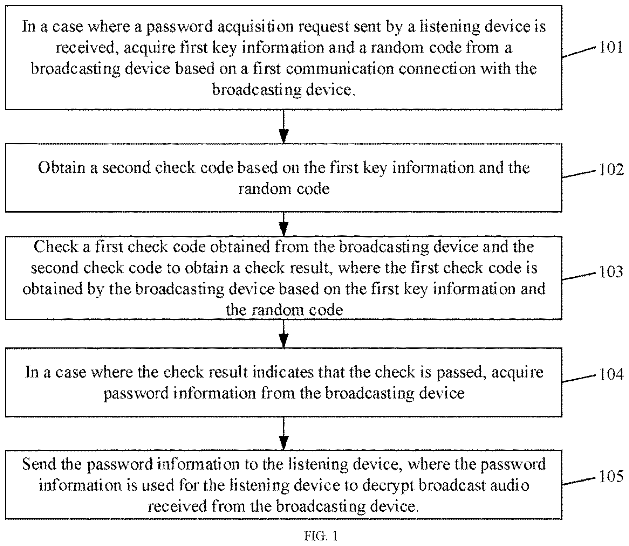

FIG. 1 is a flowchart of a data processing method according to an example embodiment. As shown in FIG. 1, the method mainly includes the following steps:

In step 101, in a case where a password acquisition request sent by a listening device is received, first key information and a random code are acquired from a broadcasting device based on a first communication connection with the broadcasting device.

In step 102, a second check code is obtained based on the first key information and the random code.

In step 103, the first check code obtained from the broadcasting device and the second check code are checked to obtain a check result. The first check code is obtained by the broadcasting device based on the first key information and the random code.

In step 104, in a case where the check result indicates that the check is passed, password information is acquired from the broadcasting device.

In step 105, the password information is sent to the listening device. The password information is used for the listening device to decrypt broadcast audio received from the broadcasting device.

It should be noted that the data processing method proposed in the embodiments of the present disclosure may be applied to an electronic device. Here, the electronic device may include: a terminal device, for example, a mobile terminal or a fixed terminal. The mobile terminal may include a device such as: a mobile phone, a tablet computer, a laptop computer, a wearable electronic device, etc. The fixed terminal may include: a desktop computer, a smart TV, a vehicle-mounted device, etc.

Here, the listening device may include a broadcast listening device (or radio listening device) such as a headset, a hearing aid, a radio, a car broadcast receiver, a smart phone, a tablet computer, or a dedicated broadcast receiver, etc.

Here, the broadcasting device may be a device that supports Bluetooth audio broadcasting technology, such as a mobile phone, a computer, a speaker with a screen, a microphone, or a loudspeaker, etc.

Here, the password acquisition request is used to obtain the password information of the broadcasting device, and the password information is used for the listening device to decrypt the broadcast audio received from the broadcasting device, so as to obtain audio to be played.

It should be noted that in related art, a user of a listening device usually needs to communicate with the owner of a broadcasting device in order to obtain password information for decrypting broadcast audio. This method is not only inefficient, but also requires the user to manually enter a long and complex password after obtaining the password. The operation procedure is cumbersome and prone to errors, affecting the user experience. In contrast, the solution in the present disclosure automatically obtains the password information by sending a password acquisition request, without the need for the user to communicate with the owner of the broadcasting device or manually enter the password, which simplifies the operation process and improves the user experience.

Here, the first communication connection may be a wireless connection established with the broadcasting device, for example, a temporarily established Bluetooth connection, which is used to obtain the password information of the broadcasting device.

Here, the first key information includes a public key of the broadcasting device. Each broadcasting device has its corresponding public key and private key, which are paired encryption tools. The public key is used to encrypt information, ensuring that only a broadcasting device holding the corresponding private key can decrypt the information; the private key is used to encrypt information so that any listening device with the corresponding public key can perform verification and decrypt the information. This asymmetric encryption mechanism ensures the security of information transmission and simplifies the process of information decryption.

It should be noted that the random code may be obtained by the broadcasting device based on a random number generation method in the Bluetooth core specification. Each broadcasting device generates a different check code every time a Bluetooth connection is established. The Bluetooth core specification is the core component of the Bluetooth technology. It specifies the common functions and protocol layers that a Bluetooth device must implement, including software and hardware modules and the way these modules transmit information and data through a host control interface. Different Bluetooth versions or implementations have different random number generation methods. A random number is used to verify the identity of a device, ensuring the security and privacy of communication between devices.

It should be noted that the first check code and the second check code may be obtained based on a check code generation method in the Bluetooth core specification. In the Bluetooth core specification, a check code is usually used to ensure the integrity and accuracy of data. A Bluetooth device uses a specific algorithm and protocol to generate check codes during a communication procedure, and attaches these check codes during data transmission. After receiving the data, a receiving party recalculates a check code and compares it with a check code provided by a sending party to detect whether the data has been erroneous or tampered with during the transmission procedure. The specific check code generation method varies depending on the Bluetooth version and specific implementation. Several different check algorithms are defined in the Bluetooth core specification to adapt to different application scenarios and requirements. These algorithms include but are not limited to cyclic redundancy check, checksum, etc.

It is understandable that when the first check code is consistent with the second check code, that is, the check is successfully passed, the terminal device may obtain the password information of the broadcasting device. This check mechanism ensures the security and privacy of communication between devices and provides a solid guarantee for the transmission of information.

As an example, it is assumed that the first key information S generated by the broadcasting device is: "B38E223C7010F17C214A04535397615C86052790F1B251D86823103571E5C1E2", and the random code R is: "9876543210FEDCBA". Based on these pieces of information, the broadcasting device calculates a check code M, namely "908F". During the communication procedure, as long as the first key information S and the random code R are not tampered, the first check code and the second check code calculated by the broadcasting device and the terminal device respectively are consistent, both of which are "908F", and thus the check is passed, ensuring the security of communication and the accuracy of data. However, when the first key information S is illegally tampered with to "65E1F217324F317C49272B33B36A3253A034831F7A054B578D326E99F7B2A08F" during the communication procedure, the second check code calculated by the terminal device is "4C5D", which is inconsistent with the first check code "908F" calculated by the broadcasting device. In this case, the check fails, and the terminal device cannot obtain the password information of the broadcasting device, thereby ensuring the security and privacy of the data. Similarly, if the random code R is tampered with to "55AAFFOOEEBBCCDD" during the communication procedure, the second check code calculated by the terminal device is "675E", which is also inconsistent with the first check code "908F" calculated by the broadcasting device, resulting in check failure and failure to obtain the password information of the broadcasting device. This check mechanism effectively prevents illegal tampering of information during transmission and ensures the reliability and security of communication.

Here, the terminal device includes a device that supports Bluetooth scan and background service protocol(s), such as a mobile phone, or a computer, may be used to discover a listening device and establish a connection with the listening device, provide a display interface for the listening device to select a broadcasting device for connection, and connect to the broadcasting device to obtain the password information of the broadcasting device for the listening device to decrypt encrypted broadcast audio.

In the data processing method proposed in the embodiments of the present disclosure, when a password acquisition request sent by a listening device is received, first key information and a random code are acquired from a broadcasting device based on a first communication connection with the broadcasting device. A second check code is obtained based on the first key information and the random code. The second check code and the first check code acquired from the broadcasting device are checked to obtain a check result. The first check code is obtained by the broadcasting device based on the first key information and the random code. In a case where the check result indicates that the check is passed, password information is acquired from the broadcasting device. The password information is sent to the listening device. The password information is used for the listening device to decrypt broadcast audio received from the broadcasting device.

That is to say, when the password acquisition request is received from the listening device, the first key information and the random code are obtained from the broadcasting device through the established first communication connection. Then, the second check code is generated using the first key information and the random code, and the second check code is compared with the first check code provided by the broadcasting device, the first check code is calculated by the broadcasting device based also on the first key information and the random code. If the comparison result shows that the two are consistent, that is, the check is passed, the password information is obtained from the broadcasting device and forwarded to the listening device. The public key of the broadcasting device and the random code can be obtained through the first communication connection, and the password information of the broadcasting device can be obtained based on the public key and the random code, and then the password information is sent to the listening device, without the need for the user to manually enter the password information, thereby simplifying the user operation and improving the user experience.

In some embodiments, in a case where the check result indicates that the check is passed, obtaining the password information from the broadcasting device includes:
in a case where the check result indicates that the check is passed, generating a temporary key;
encrypting the temporary key based on the first key information to obtain second key information;
sending the second key information to the broadcasting device;
receiving encrypted information which is obtained by the broadcasting device based on the first key information and the second key information; and
performing a decryption process on the encrypted information to obtain the password information.

Here, a temporary key is an encryption technology used during a communication procedure. In a communication or "session", a secret key is shared between devices to encrypt and decrypt information transmitted in the session. The temporary key is usually generated dynamically and is generated only when session data encryption is needed, and the temporary key is used to encrypt communication data between devices.

It should be noted that the temporary key is obtained based on a temporary key generation method in the Bluetooth core specification, which ensures the security and effectiveness of the temporary key.

It should be noted that the public key encryption, private key decryption, and temporary key encryption and decryption operations are implemented based on the encryption and decryption methods in the Bluetooth core specification.

It can be understood that the temporary key is encrypted using the first key information, that is, it is encrypted using the public key corresponding to the broadcasting device, so that only the broadcasting device corresponding to the public key can perform successful decryption using the private key, thereby obtaining the decrypted temporary key.

Here, the encrypted information includes the password information encrypted using the temporary key. The broadcasting device first obtains the corresponding private key based on the first key information, and uses the private key to decrypt the second key information to obtain the temporary key. Subsequently, the broadcasting device uses the temporary key to encrypt the password information to generate encrypted information. After obtaining the encrypted information, the terminal device can use the temporary key to decrypt the encrypted information to obtain the password information. This not only ensures the security of the password information during transmission, but also enhances the reliability of communication between devices.

For example, it is assumed that the temporary key S generated by the terminal device is: "E2B8D861F950937E416E293B47E52A21", the public key Pub of the broadcasting device is: "B38E223C7010F17C214A04535397615C86052790F1B251D86823103571E5C1E2", the private key Pri is: "65E1F217324F317C49272B33B36A3253A034831F7A054B578D326E99F7B2A08F", and the password information PW is: "171582682682721", then the second key information obtained by encrypting the temporary key S with the public key Pub is: "ABC123DEF4567890ABCDEF1234567890ABCDEF1234567890ABCDEF1234567890ABCDE", the encrypted information obtained by encrypting the password information PW with the temporary key S is: "1234567890ABCDEF1234567890ABCDEF1234567890ABCD". Through this encryption and decryption method, the security of the generation of the temporary key, encryption and subsequent information transmission is ensured, and obtaining or tampering with the relevant information by an unauthorized third party can be effectively prevented.

In an embodiment of the present disclosure, after the check result indicates that the check is passed, the terminal device generates the temporary key, and uses the first key information to encrypt the temporary key to generate the second key information. Subsequently, the second key information is sent to the broadcasting device. After that, the terminal device receives the encrypted information encrypted by the broadcasting device using the first key information and the second key information, and decrypts the encrypted information, and finally successfully obtains the password information. Through the above encryption and decryption process, the security and reliability of communication between devices can be improved, data privacy can be protected, and the interoperability between devices can be enhanced.

In some embodiments, the method further includes:
in a case where the check result indicates that the check fails, sending a connection rejection message to the broadcasting device;
receiving a disconnection message sent by the broadcasting device based on the first communication connection; and
based on the disconnect message, disconnecting the first communication connection.

Here, the connection rejection message is used to indicate to disconnect the first communication connection with the broadcasting device.

In the embodiment of the present disclosure, when the check result indicates that the check fails, the terminal device sends the connection rejection message to the broadcasting device to disconnect the first communication connection. Subsequently, the terminal device receives the disconnection message sent by the broadcasting device based on the first communication connection, and disconnects the first communication connection according to the message. When the check result indicates that the check fails, it means that the first key information of the currently connected broadcasting device and the random code have been tampered with or destroyed during the communication procedure, and the first communication connection is no longer secure, and thus the first communication connection needs to be disconnected. This method can ensure the security and accuracy of communication between devices.

In some embodiments, the method further includes:
in a case where a communication connection request sent by the listening device is received, establishing a second communication connection with the listening device;
receiving a device selection request sent by the listening device based on the second communication connection; and
based on the device selection request, determining a broadcasting device that the listening device selects to listen to.

Here, the communication connection request is used to indicate to establish a second communication connection with the listening device, that is, a Bluetooth connection.

It should be noted that when the terminal device receives the device selection request sent by the listening device, the terminal device displays, on a display interface, broadcasting device(s) to be connected for the user of the listening device to select. The user of the listening device may select, on the interface, a broadcasting device to be listened to according to his or her needs. When the broadcasting device to be listened to is selected, the terminal device establishes a first communication connection with the selected broadcasting device.

In the embodiment of the present disclosure, when receiving the communication connection request sent by the listening device, the terminal device establishes the second communication connection with the listening device. Subsequently, the terminal device receives the device selection request sent by the listening device based on the second communication connection, and determines a broadcasting device selected by the listening device based on the request, so as to ensure that the listening device is connected to the broadcasting device expected to be connected, and ensure that the broadcasting audio is listened to correctly.

In some embodiments, the method further includes:
sending a temporary communication connection request to the broadcasting device;
receiving a temporary connection confirmation message which is sent by the broadcasting device after receiving the temporary communication connection request, and establishing a first communication connection with the broadcasting device; and
in a case where the password information is successfully obtained, disconnecting the first communication connection.

Here, the temporary communication connection request is used to indicate to establish the first communication connection with the broadcasting device, and may be a temporarily established Bluetooth connection.

In the embodiment of the present disclosure, the terminal device sends the temporary communication connection request to the broadcasting device, then receives the temporary connection confirmation message sent by the broadcasting device, and establishes the first communication connection with the broadcasting device accordingly. After successfully obtaining the password information, the terminal device actively disconnects the first communication connection with the broadcasting device to ensure the security and efficiency of the communication procedure.

In some embodiments, acquiring the first key information and the random code from the broadcasting device based on the first communication connection includes:
sending a key acquisition request to the broadcasting device based on the first communication connection; and
receive the first key information and the random code sent by the broadcasting device; where the first key information includes a public key of the broadcasting device, and the random code is generated by the broadcasting device based on a key acquisition request.

It should be noted that the first key information includes the public key of the broadcasting device, which may be used to calculate the first check code and the second check code to ensure the security and accuracy of the communication procedure between the terminal device and the broadcasting device. The public key of the broadcasting device may also be used to encrypt the temporary key generated by the terminal device and generate the second key information to send to the broadcasting device to ensure the security of the temporary key during the communication procedure.

In the embodiment of the present disclosure, based on the established first communication connection, the terminal device sends the key acquisition request to the broadcasting device. Subsequently, the first key information and the random code sent by the broadcasting device are received. The first key information contains the public key of the broadcasting device, and the random code is generated by the broadcasting device according to the key acquisition request based on the Bluetooth core specification, so as to ensure the security and accuracy of the communication procedure.

In some embodiments, the method further includes:
in a case the check result is obtained, outputting prompt information corresponding to the check result through a display interface;
in a case where a confirmation operation acting on the prompt information is detected, determining that the check is passed; and
in a case where a rejection operation acting on the prompt information is detected, determining that the check fails.

Here, the prompt information may be flexibly displayed in the form of a pop-up window, subtitles, etc. according to actual needs. No matter whether the prompt information pops up in the center of the screen in the form of a pop-up window or is displayed in the form of subtitle(s) at the bottom or top of the display interface, the prompt information clearly contains relevant content about whether the check is passed or fails. If the check is passed, the prompt information may inform the user in a positive and affirmative tone, such as: "Check is passed!" If the check fails, the prompt information may remind the user in a clear and warning way, such as: "Check fails." Through the prompt information, the user can intuitively understand the check result, so as to make corresponding operational adjustments or decisions, and improve the user experience.

It should be noted that the prompt information not only includes the check result of whether the check is passed, but also provides the user with two operation options: confirmation and rejection. The user can autonomously judge whether to continue to listen to the subsequent broadcast audio based on the actual situation and the check result. This not only ensures the accurate communication of the check result, but also gives the user full autonomy, allowing him or her to make appropriate choices based on actual needs.

For example, when the check result is displayed as "Check is passed", if the user chooses to click or tap the confirmation operation, then the subsequent password information acquisition and other operations can be successfully performed. If the user chooses to click or tap the rejection operation, a connection rejection message is immediately sent to the broadcasting device, and the established first communication connection is actively disconnected. On the contrary, if the check result is displayed as "Check fails", even if the user clicks the confirmation operation and attempts to perform password information acquisition and other operations, these subsequent operations cannot be successfully performed due to the check failure, and the user can be prompted with information that the operation failed. If the user chooses to click the rejection operation, a connection rejection message is sent according to the normal process, and the first communication connection is disconnected.

In the embodiment of the present disclosure, when the check result is obtained, prompt information matching the check result is presented through the display interface. If the user chooses to perform a confirmation operation on the prompt information, the check is determined to be passed and subsequent operation(s) may be allowed; on the contrary, if the user chooses a rejection operation, the check is determined to be failed and further device interaction is blocked. Through the user's confirmation of the check result, malicious attacks such as identity forgery are effectively prevented, and the security and reliability of communication between devices are significantly improved.

In the data processing method proposed in the embodiments of the present disclosure, in a case where the password acquisition request sent by the listening device is received, the first key information and the random code are acquired from the broadcasting device based on the first communication connection with the broadcasting device. The second check code is obtained based on the first key information and the random code. The second check code and the first check code acquired from the broadcasting device are checked to obtain a check result. The first check code is obtained by the broadcasting device based on the first key information and the random code. In a case where the check result indicates that the check is passed, the password information is acquired from the broadcasting device. The password information is sent to the listening device; where the password information is used for the listening device to decrypt the broadcast audio received from the broadcasting device.

That is to say, when the password acquisition request is received from the listening device, the first key information and the random code are acquired from the broadcasting device through the established first communication connection. Then, the second check code is generated using the first key information and the random code, and the second check code is compared with the first check code provided by the broadcasting device, and the first check code is also calculated by the broadcasting device based on the first key information and the random code. If the comparison result shows that the two are consistent, that is, the check is passed, the password information is acquired from the broadcasting device and forwarded to the listening device. The public key of the broadcasting device and the random code can be obtained through the first communication connection, and the password information of the broadcasting device can be obtained based on the public key and the random code, and then the password information is sent to the listening device, without the need for the user to manually enter the password information, thereby simplifying the user operation, and improving the user experience.

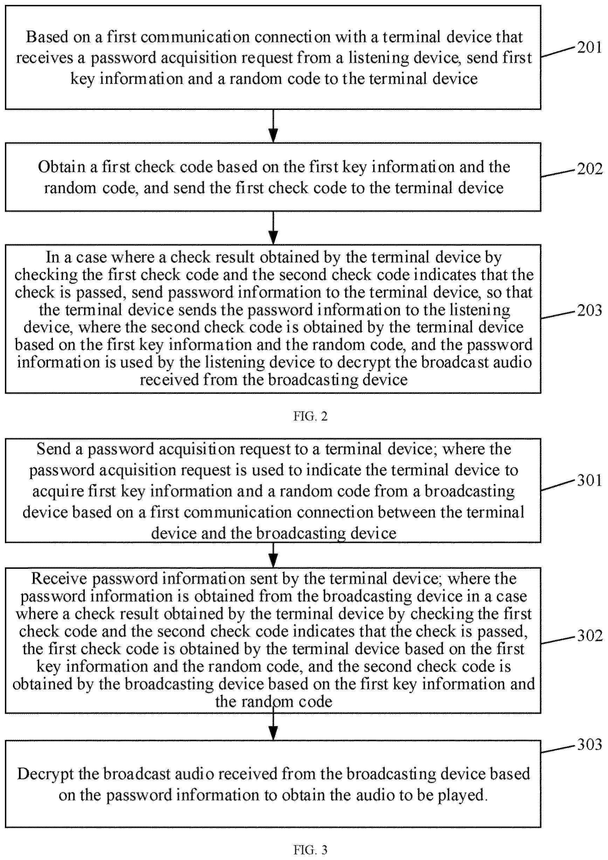

FIG. 2 is a flowchart of another data processing method according to an example embodiment. As shown in FIG. 2, the method mainly includes the following steps:

In step 201, based on a first communication connection with a terminal device that receives a password acquisition request from a listening device, first key information and a random code are sent to the terminal device.

In step 202, a first check code is obtained based on the first key information and the random code, and the first check code is sent to the terminal device.

In step 203, in a case where a check result obtained by the terminal device by checking the first check code and the second check code indicates that the check is passed, password information is sent to the terminal device, so that the terminal device sends the password information to the listening device. The second check code is obtained by the terminal device based on the first key information and the random code, and the password information is used by the listening device to decrypt the broadcast audio received from the broadcasting device.

In the embodiment of the present disclosure, after establishing the first communication connection with the terminal device that receives the password acquisition request from the listening device, the first key information and the random code are sent to the terminal device. Based on these pieces of information, the first check code is generated and sent to the terminal device. When the terminal device obtains the second check code using the same method and confirms that the two check codes are consistent, that is, the check is passed, the password information is sent to the terminal device, so that the password information can be sent to the listening device. The listening device uses the password information to decrypt the broadcast audio received from the broadcasting device to ensure the normal play of the audio content. By sending the first key information and the random code, as well as the subsequent check code comparison procedure, the communication security between the terminal device and the broadcasting device is ensured. The introduction of the check mechanism effectively prevents the information from being tampered with or misused, thereby ensuring the correctness and security of the password information. Finally, the listening device can use the received password information to successfully decrypt the broadcast audio, without the need for the user to manually enter the password information, thereby improving the user experience.

In some embodiments, in a case where the check result obtained by the terminal device by checking the first check code and the second check code indicates that the check is passed, sending the password information to the terminal device includes:
in a case where the check result indicates that the check is passed, receiving second key information sent by the terminal device;
encrypting the password information based on the first key information and the second key information to obtain encrypted information; and
sending the encrypted information to the terminal device so that the terminal device decrypts the encrypted information to obtain the password information.

In the embodiment of the present disclosure, after the check result confirms that the check is passed, the second key information sent by the terminal device is received, and then the first key information and the second key information are used to encrypt the password information to generate encrypted information. After the encryption process is completed, the encrypted information is sent to the terminal device, which decrypts the encrypted information to restore the password information. Through the encryption operation, encryption protection of the password information is achieved, the security and integrity of the information during the communication procedure is ensured, and the password information is effectively prevented from being illegally intercepted or tampered with during the transmission procedure, thereby protecting the privacy and security of the information.

In some embodiments, the method further includes:
in a case where the check result indicates that the check fails, receiving a connection rejection message sent by the terminal device;
sending a disconnection message to the terminal device based on the first communication connection; and
based on the disconnection message, disconnecting the first communication connection.

In the embodiment of the present disclosure, when the check result indicates that the check is not passed, the connection rejection message sent by the receiving terminal device is received, and the disconnection message is sent to the terminal device based on the current first communication connection. Subsequently, the first communication connection is actively disconnected according to the disconnection message. In this way, it can be ensured that in the case of a check failure, the unsafe communication connection can be terminated in a timely and effective manner, preventing potential security risks and avoiding potential information leakage or malicious attacks caused by a check failure.

In some embodiments, the method further includes:
in a case where a temporary communication connection request sent by the terminal device is received, sending a temporary connection confirmation message to the terminal device;
where the temporary connection confirmation message is used to indicate the terminal device to establish the first communication connection with the broadcasting device; and
in a case where the password information is sent successfully, disconnecting the first communication connection.

In the embodiment of the present disclosure, when the terminal device sends the temporary communication connection request, the broadcasting device makes a respond and sends the temporary connection confirmation message to indicate the terminal device to establish the first communication connection with the broadcasting device, thereby ensuring rapid establishment and confirmation of the communication connection and improving communication efficiency. After successfully sending the password information, the terminal device actively disconnects the first communication connection to avoid wasting communication resources and potential security risks.

In some embodiments, sending the first key information and the random code to the terminal device includes:
receiving the key acquisition request sent by the terminal device based on the first communication connection; and
sending the First key information and the random code to the terminal device based on the first communication connection; where the first key information includes a public key of the broadcasting device, and the random code is generated based on the key acquisition request.

In the embodiment of the present disclosure, after receiving the key acquisition request sent by the terminal device through the first communication connection, a response is made and the first key information and the random code are sent to the terminal device. The first key information contains the public key of the broadcasting device, which is used for various subsequent encryption operations; and the random code is generated based on the Bluetooth core specification according to the key acquisition request, which enhances the security and accuracy of the communication procedure.

FIG. 3 is a flowchart of another data processing method according to an example embodiment. As shown in FIG. 3, the method mainly includes the following steps:

In step 301, a password acquisition request is sent to a terminal device; where the password acquisition request is used to indicate the terminal device to acquire first key information and a random code from a broadcasting device based on a first communication connection between the terminal device and the broadcasting device.

In step 302, password information sent by the terminal device is received; where the password information is obtained from the broadcasting device in a case where a check result obtained by the terminal device by checking the first check code and the second check code indicates that the check is passed, the first check code is obtained by the terminal device based on the first key information and the random code, and the second check code is obtained by the broadcasting device based on the first key information and the random code.

In step 303, the broadcast audio received from the broadcasting device is decrypted based on the password information to obtain the audio to be played.

In the embodiment of the present disclosure, the password acquisition request is sent to the terminal device, and the request indicates the terminal device to utilize the first communication connection between the terminal device and the broadcasting device to obtain the first key information and the random code from the broadcasting device. Subsequently, the password information sent by the terminal device is received, and the password information is obtained from the broadcasting device after the terminal device checks the first check code and the second check code and the check is passed. The first check code is generated by the terminal device based on the received key information and the random code, and the second check code is generated by the broadcasting device based on the same key information and the random code. Finally, the received broadcast audio is decrypted using the password information to obtain the audio to be played, thereby ensuring the secure transmission and correct play of the audio content, without the need for the user to manually enter the password information, and improving the user experience.

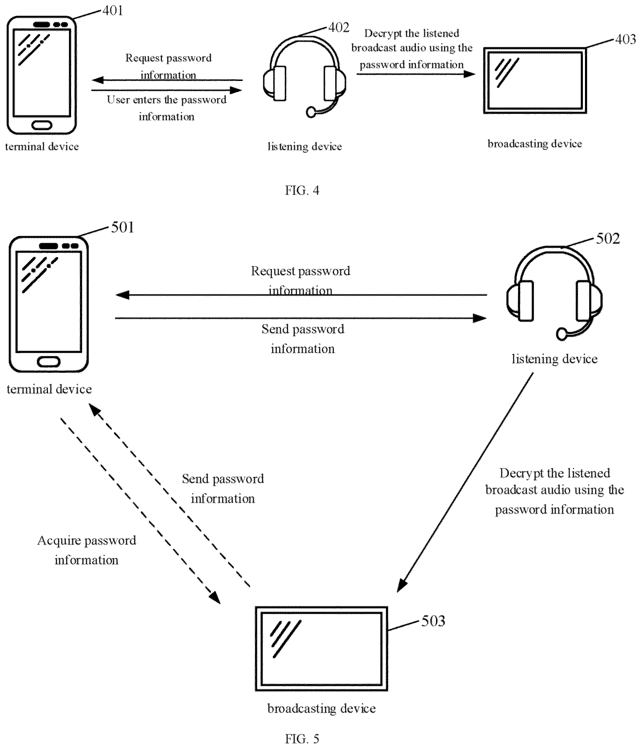

FIG. 4 is a schematic diagram of an existing application scenario of listening to encrypted broadcast audio. As shown in FIG. 4, when a listening device 402 is ready to listen to encrypted broadcast audio sent by a broadcast device 403, the listening device 402 requests password information of the broadcast device 403 from a terminal device 401 connected to the listening device 402. A user of the listening device 402 may obtain the corresponding password information by communicating with the owner of the broadcast device 403, and input it into the terminal device 401. The terminal device 401 then sends this password information to the listening device 402, and then the listening device 402 decrypts the listened broadcast audio by the password information. Since the password information set by the broadcast device 403 may be long, the user needs to spend a long time to manually input the password information, which is not convenient to use and results in a poor user experience.

FIG. 5 is a diagram showing an application scenario of listening to encrypted broadcast audio according to an example embodiment. As shown in FIG. 5, when a listening device 502 is ready to listen to encrypted broadcast audio sent by a broadcast device 503, the listening device 502 requests password information of the broadcast device 503 from a terminal device 501 connected to the listening device 502. Then, the terminal device 501 establishes a temporary connection with the broadcast device 503, and automatically obtains the password information of the broadcast device 503 through the temporary connection. After obtaining the password information, the terminal device 501 sends the password information to the listening device 502, and then the listening device 502 decrypts the listened or received broadcast audio by the password information. Here, since the terminal device 501 can automatically obtain the password information of the broadcast device 503 through the temporary connection, the user does not need to manually enter the password information, which simplifies the user operation and improves the user experience.

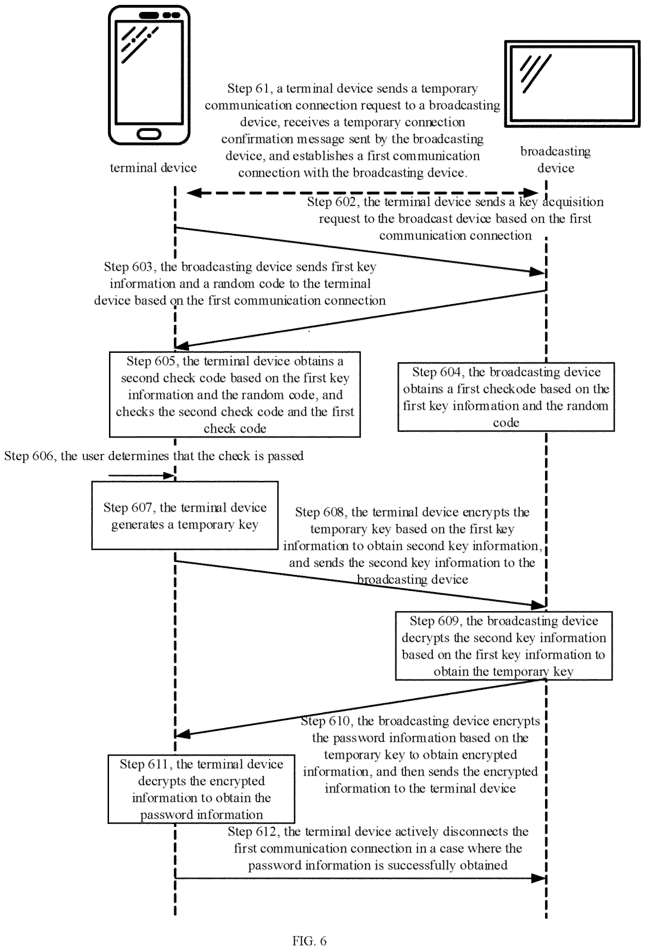

FIG. 6 is a timing diagram of interactions between a terminal device and a broadcast device when check is passed according to an example embodiment. As shown in FIG. 6, the main steps include:

In step 601, a terminal device sends a temporary communication connection request to a broadcasting device, receives a temporary connection confirmation message sent by the broadcasting device, and establishes a first communication connection with the broadcasting device.

In step 602, the terminal device sends a key acquisition request to the broadcast device based on the first communication connection.

In step 603, the broadcasting device sends first key information and a random code to the terminal device based on the first communication connection.

In step 604, the broadcasting device obtains a first check code based on the first key information and the random code.

In step 605, the terminal device obtains a second check code based on the first key information and the random code, and checks the second check code and the first check code.

In step 606, the user confirms that the check is passed.

In step 607, the terminal device generates a temporary key.

In step 608, the terminal device encrypts the temporary key based on the first key information to obtain second key information, and sends the second key information to the broadcasting device.

In step 609, the broadcasting device decrypts the second key information based on the first key information to obtain the temporary key.

In step 610, the broadcasting device encrypts the password information based on the temporary key to obtain encrypted information, and then sends the encrypted information to the terminal device.

In step 611, the terminal device decrypts the encrypted information to obtain the password information.

In step 612, the terminal device actively disconnects the first communication connection in a case where the password information is successfully obtained.

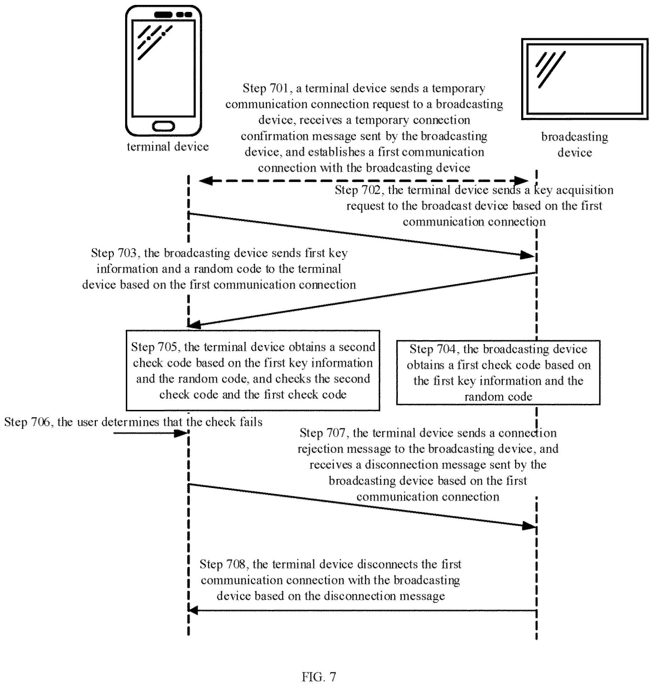

FIG. 7 is a timing diagram of interaction(s) between a terminal device and a broadcast device when check fails according to an example embodiment. As shown in FIG. 7, the main steps include:

In step 701, a terminal device sends a temporary communication connection request to a broadcasting device, receives a temporary connection confirmation message sent by the broadcasting device, and establishes a first communication connection with the broadcasting device.

In step 702, the terminal device sends a key acquisition request to the broadcast device based on the first communication connection.

In step 703, the broadcasting device sends first key information and a random code to the terminal device based on the first communication connection.

In step 704, the broadcasting device obtains a first check code based on the first key information and the random code.

In step 705, the terminal device obtains a second check code based on the first key information and the random code, and checks the second check code and the first check code.

In step 706, the user determines that the check fails.

In step 707, the terminal device sends a connection rejection message to the broadcasting device, and receives a disconnection message sent by the broadcasting device based on the first communication connection.

In step 708, the terminal device disconnects the first communication connection with the broadcasting device based on the disconnection message.

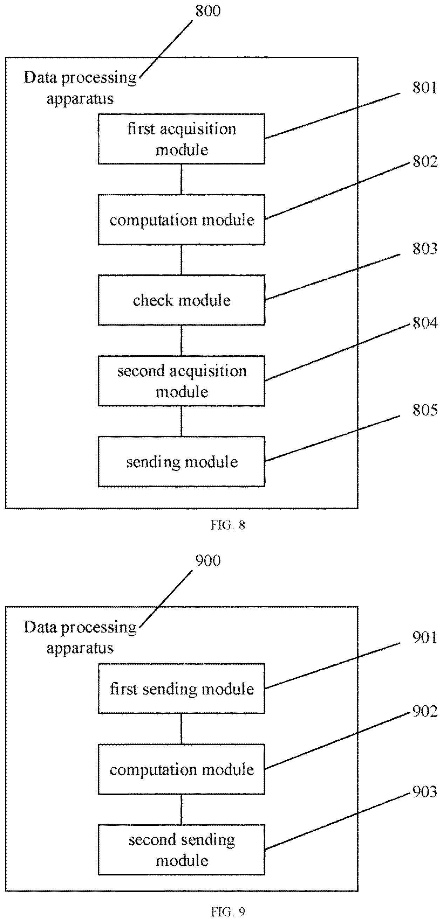

FIG. 8 is a block diagram of a data processing apparatus according to an example embodiment. As shown in FIG. 8, the apparatus mainly includes a first acquisition module 801, a computation module 802, a check module 803, a second acquisition module 804 and a sending module 805.

The first acquisition module 801 is configured to, in a case where a password acquisition request sent by a listening device is received, acquire first key information and a random code from a broadcasting device based on a first communication connection with the broadcasting device.

The computation module 802 is configured to obtain a second check code based on the first key information and the random code.

The check module 803 is configured to check a first check code acquired from the broadcasting device and the second check code to obtain a check result, wherein the first check code is obtained by the broadcasting device based on the first key information and the random code.

The second acquisition module 804 is configured to, in a case where the check result indicates that check is passed, acquire password information from the broadcasting device.

The sending module 805 is configured to send the password information to the listening device, wherein the password information is used for the listening device to decrypt broadcast audio received from the broadcasting device.

In some embodiments, the apparatus 800 further includes:
in the case where the check result indicates that the check is passed, generating a temporary key;
encrypting the temporary key based on the first key information to obtain second key information;
sending the second key information to the broadcasting device;
receiving encrypted information obtained by the broadcasting device based on the first key information and the second key information; and
decrypting the encrypted information to obtain the password information.

In some embodiments, the apparatus 800 further includes:
in a case where the check result indicates that the check fails, sending a connection rejection message to the broadcasting device;
receiving a disconnection message which is sent by the broadcasting device based on the first communication connection; and
based on the disconnection message, disconnecting the first communication connection.

In some embodiments, the apparatus 800 further includes:
in a case where a communication connection request sent by the listening device is received, establishing a second communication connection with the listening device;
receiving a device selection request sent by the listening device based on the second communication connection; and
based on the device selection request, determining a broadcasting device selected by the listening device for listening.

In some embodiments, the apparatus 800 further includes:
sending a temporary communication connection request to the broadcasting device;
receiving a temporary connection confirmation message which is sent by the broadcasting device after receiving the temporary communication connection request, and establishing the first communication connection with the broadcasting device; and
in a case where the password information is successfully obtained, disconnecting the first communication connection.

In some embodiments, the apparatus 800 further includes:
sending a key acquisition request to the broadcasting device based on the first communication connection; and
receiving the first key information and the random code sent by the broadcasting device, wherein the first key information includes a public key of the broadcasting device, and the random code is generated by the broadcasting information based on the key acquisition request.

In some embodiments, the apparatus 800 further includes:
in a case where the check result is obtained, outputting prompt information corresponding to the check result through a display interface;
in a case where a confirmation operation acting on the prompt information is detected, determining that the check is passed; and
in a case where a rejection operation acting on the prompt information is detected, determining that the check fails.

FIG. 9 is a block diagram showing another data processing apparatus according to an example embodiment. As shown in FIG. 9, the apparatus mainly includes a first sending module 901, a computation module 902, and a second sending module 903.

The first sending module 901 is configured to, based on a first communication connection with a terminal device that receives a password acquisition request from a listening device, sending first key information and a random code to the terminal device.

The computation module 902 is configured to obtain a first check code based on the first key information and the random code, and sending the first check code to the terminal device.

The second sending module 903 is configured to, in a case where a check result obtained by the terminal device by checking the first check code and a second check code indicates that check is passed, sending password information to the terminal device, so that the terminal device sends the password information to the listening device, wherein the second check code is obtained by the terminal device based on the first key information and the random code, and the password information is used for the listening device to decrypt broadcast audio received from a broadcasting device.

In some embodiments, the apparatus 900 further includes:
in a case where the check result indicates that the check is passed, receiving second key information sent by the terminal device;
encrypting the password information based on the first key information and the second key information to obtain encrypted information; and
sending the encrypted information to the terminal device so that the terminal device decrypts the encrypted information to obtain the password information.

In some embodiments, the apparatus 900 further includes:
in a case where the check result indicates that the check fails, receiving a connection rejection message sent by the terminal device;
sending a disconnection message to the terminal device based on the first communication connection; and
based on the disconnection message, disconnecting the first communication connection.

In some embodiments, the apparatus 900 further includes:
in a case where a temporary communication connection request sent by the terminal device is received, sending a temporary connection confirmation message to the terminal device;
wherein the temporary connection confirmation message is used to indicate the terminal device to establish the first communication connection with the broadcasting device; and
in a case where the password information is sent successfully, disconnecting the first communication connection.

In some embodiments, the apparatus 900 further includes:
receiving a key acquisition request sent by the terminal device based on the first communication connection; and
sending the first key information and the random code to the terminal device based on the first communication connection, wherein the first key information includes a public key of the broadcasting device, and the random code is generated based on the key acquisition request.

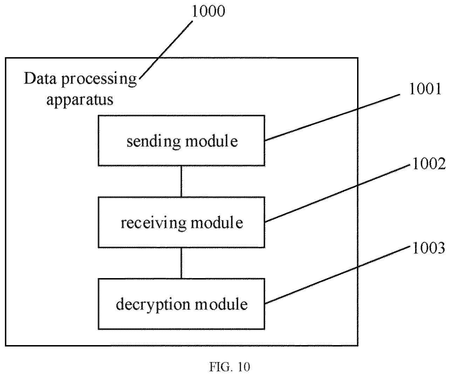

FIG. 10 is a block diagram showing another data processing apparatus according to an example embodiment. As shown in FIG. 10, the apparatus mainly includes a sending module 1001, a receiving module 1002 and a decryption module 1003.

The sending module 1001 is configured to send a password acquisition request to a terminal device, wherein the password acquisition request is used to indicate the terminal device to obtain first key information and a random code from a broadcasting device based on a first communication connection between the terminal device and the broadcasting device.

The receiving module 1002 is configured to receive password information sent by the terminal device, wherein the password information is obtained from the broadcasting device in a case where a check result obtained by the terminal device by checking a first check code and a second check code indicates that check is passed, the first check code is obtained by the terminal device based on the first key information and the random code, and the second check code is obtained by the broadcasting device based on the first key information and the random code.

The description module is configured to decrypt broadcast audio received from the broadcasting device based on the password information to obtain audio to be played.

Regarding the apparatuses in the above embodiments, the specific manner in which each module performs operations has been described in detail in the embodiments of the methods, and will not be elaborated here.

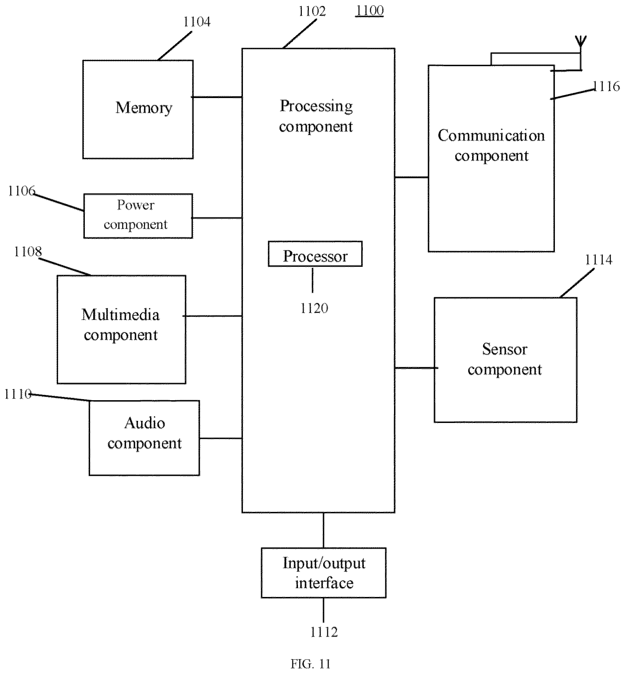

FIG. 11 is a structural block diagram of an apparatus 1100 according to an example embodiment. For example, the apparatus 1100 may be a mobile phone, a computer, digital broadcast terminal, a messaging device, a gaming console, a tablet, a medical device, exercise equipment, a personal digital assistant, and the like.

Referring to FIG. 11, the apparatus 1100 may include one or more of the following components: a processing component 1102, a memory 1104, a power component 1106, a multimedia component 1108, an audio component 1110, an input/output (I/O) interface 1112, a sensor component 1114, and a communication component 1116.

The processing component 1102 typically controls overall operations of the apparatus 1100, such as the operations associated with at least one of display, telephone calls, data communications, camera operations, and recording operations. The processing component 1102 may include one or more processors 1120 to execute instructions to perform all or part of the steps in the above described methods. Moreover, the processing component 1102 may include one or more modules which facilitate the interaction between the processing component 1102 and other components. For instance, the processing component 1102 may include a multimedia module to facilitate the interaction between the multimedia component 1108 and the processing component 1102.

The memory 1104 is configured to store various types of data to support the operation of the apparatus 1100. Examples of such data include at least one of: instructions for any applications or methods operated on the apparatus 1100, contact data, phonebook data, messages, pictures, video, etc. The memory 1104 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1106 provides power to various components of the apparatus 1100. The power component 1106 may include at least one of: a power management system, one or more power sources, and any other components associated with the generation, management, and distribution of power in the apparatus 1100.

The multimedia component 1108 includes a screen providing an output interface between the apparatus 1100 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1108 includes a front camera and/or a rear camera. The front camera and the rear camera may receive an external multimedia datum while the apparatus 1100 is in an operation mode, such as a photographing mode or a video mode. Each of the front camera and the rear camera may be a fixed optical lens system or have focus and optical zoom capability.

The audio component 1110 is configured to output and/or input audio signals. For example, the audio component 1110 includes a microphone ("MIC") configured to receive an external audio signal when the apparatus 1100 is in an operation mode, such as a call mode, a recording mode, and a voice recognition mode. The received audio signal may be further stored in the memory 1104 or transmitted via the communication component 1116. In some embodiments, the audio component 1110 further includes a speaker to output audio signals.

The I/O interface 1112 provides an interface between the processing component 1102 and peripheral interface modules, such as a keyboard, a click wheel, buttons, and the like. The buttons may include, but are not limited to, a home button, a volume button, a starting button, and a locking button.

The sensor component 1114 includes one or more sensors to provide status assessments of various aspects of the apparatus 1100. For instance, the sensor component 1114 may detect an open/closed status of the apparatus 1100, relative positioning of components, e.g., the display and the keypad, of the apparatus 1100, a change in position of the apparatus 1100 or a component of the apparatus 1100, a presence or absence of user contact with the apparatus 1100, an orientation or an acceleration/deceleration of the apparatus 1100, and a change in temperature of the apparatus 1100. The sensor component 1114 may include a proximity sensor configured to detect the presence of nearby objects without any physical contact. The sensor component 1114 may also include a light sensor, such as a Complementary Metal Oxide Semiconductor (CMOS) or Charge Coupled Device (CCD) image sensor, for use in imaging applications. In some embodiments, the sensor component 1114 may also include but not limited to at least one of: an accelerometer sensor, a gyroscope sensor, a magnetic sensor, a pressure sensor, and a temperature sensor.

The communication component 1116 is configured to facilitate communication, wired or wirelessly, between the apparatus 1100 and other devices. The apparatus 1100 can access a wireless network based on a communication standard, such as WiFi, 4G, or 5G, or a combination thereof. In one example embodiment, the communication component 1116 receives a broadcast signal or broadcast associated information from an external broadcast management system via a broadcast channel. In one example embodiment, the communication component 1116 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the apparatus 1100 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components.

In example embodiments, there is also provided a non-transitory computer-readable storage medium including instructions, such as the memory 1104 including executable instructions or computer programs, the instructions or computer programs are executable by the processor 1120 in the apparatus 1100, for performing the above-described methods. For example, the non-transitory computer-readable storage medium may be a ROM, a Random Access Memory (RAM), a Compact Disc Read-Only Memory (CD-ROM), a magnetic tape, a floppy disc, an optical data storage device, and the like.

There is provided a non-transitory computer-readable storage medium, when instructions in the storage medium are executed by a processor of a mobile terminal, the mobile terminal is caused to perform any one of the above-mentioned data processing methods of the embodiments of the present disclosure. For example, the method includes:
in a case where a password acquisition request sent by a listening device is received, acquiring first key information and a random code from a broadcasting device based on a first communication connection with the broadcasting device;
obtaining a second check code based on the first key information and the random code;
checking a first check code acquired from the broadcasting device and the second check code to obtain a check result, wherein the first check code is obtained by the broadcasting device based on the first key information and the random code;
in a case where the check result indicates that check is passed, acquiring password information from the broadcasting device; and
sending the password information to the listening device, wherein the password information is used for the listening device to decrypt broadcast audio received from the broadcasting device..

An embodiment of the present disclosure provides a computer program product, which includes: a computer program or executable instructions. The computer program or executable instructions are stored in a computer-readable storage medium. A processor of a computer device reads the computer program or executable instructions from the computer-readable storage medium, and the processor executes the computer program or executable instructions, to cause the computer device to perform any one of the data processing methods described above in the embodiments of the present disclosure.

The present disclosure further provides embodiments as follows.

There is provided a data processing method, including:
in a case where a password acquisition request sent by a listening device is received, acquiring first key information and a random code from a broadcasting device based on a first communication connection with the broadcasting device;
obtaining a second check code based on the first key information and the random code;
checking a first check code acquired from the broadcasting device and the second check code to obtain a check result, wherein the first check code is obtained by the broadcasting device based on the first key information and the random code;
in a case where the check result indicates that check is passed, acquiring password information from the broadcasting device; and
sending the password information to the listening device, wherein the password information is used for the listening device to decrypt broadcast audio received from the broadcasting device.

In some embodiments, acquiring the password information from the broadcasting device in a case where the check result indicates that check is passed includes:
in the case where the check result indicates that the check is passed, generating a temporary key;
encrypting the temporary key based on the first key information to obtain second key information;
sending the second key information to the broadcasting device;
receiving encrypted information obtained by the broadcasting device based on the first key information and the second key information; and
decrypting the encrypted information to obtain the password information.

In some embodiments, the method further includes:
in a case where the check result indicates that the check fails, sending a connection rejection message to the broadcasting device;
receiving a disconnection message which is sent by the broadcasting device based on the first communication connection; and
based on the disconnection message, disconnecting the first communication connection.

In some embodiments, the method further includes:
in a case where a communication connection request sent by the listening device is received, establishing a second communication connection with the listening device;
receiving a device selection request sent by the listening device based on the second communication connection; and
based on the device selection request, determining a broadcasting device selected by the listening device for listening.

In some embodiments, the method further includes:
sending a temporary communication connection request to the broadcasting device;
receiving a temporary connection confirmation message which is sent by the broadcasting device after receiving the temporary communication connection request, and establishing the first communication connection with the broadcasting device; and
in a case where the password information is successfully obtained, disconnecting the first communication connection.

In some embodiments, acquiring the first key information and the random code from the broadcasting device based on the first communication connection includes:
sending a key acquisition request to the broadcasting device based on the first communication connection; and
receiving the first key information and the random code sent by the broadcasting device, wherein the first key information includes a public key of the broadcasting device, and the random code is generated by the broadcasting information based on the key acquisition request.

In some embodiments, the method further includes:
when the check result is obtained, outputting prompt information corresponding to the check result through a display interface;
in a case where a confirmation operation acting on the prompt information is detected, determining that the check is passed; and
in a case where a rejection operation acting on the prompt information is detected, determining that the check fails.

There is further provided a data processing method, including:
based on a first communication connection with a terminal device that receives a password acquisition request from a listening device, sending first key information and a random code to the terminal device;
obtaining a first check code based on the first key information and the random code, and sending the first check code to the terminal device;
in a case where a check result obtained by the terminal device by checking the first check code and a second check code indicates that check is passed, sending password information to the terminal device, so that the terminal device sends the password information to the listening device, wherein the second check code is obtained by the terminal device based on the first key information and the random code, and the password information is used for the listening device to decrypt broadcast audio received from a broadcasting device.

In some embodiments, sending password information to the terminal device in the case where the check result obtained by the terminal device by checking the first check code and the second check code indicates that check is passed includes:
in a case where the check result indicates that the check is passed, receiving second key information sent by the terminal device;
encrypting the password information based on the first key information and the second key information to obtain encrypted information; and
sending the encrypted information to the terminal device so that the terminal device decrypts the encrypted information to obtain the password information.

In some embodiments, the method further includes:
in a case where the check result indicates that the check fails, receiving a connection rejection message sent by the terminal device;
sending a disconnection message to the terminal device based on the first communication connection; and
based on the disconnection message, disconnecting the first communication connection.

In some embodiments, the method further includes:
in a case where a temporary communication connection request sent by the terminal device is received, sending a temporary connection confirmation message to the terminal device;
wherein the temporary connection confirmation message is used to indicate the terminal device to establish the first communication connection with the broadcasting device; and
in a case where the password information is sent successfully, disconnecting the first communication connection.

In some embodiments, sending the first key information and the random code to the terminal device includes:
receiving a key acquisition request sent by the terminal device based on the first communication connection; and
sending the first key information and the random code to the terminal device based on the first communication connection, wherein the first key information includes a public key of the broadcasting device, and the random code is generated based on the key acquisition request.

There is further provided a data processing method, including:
sending a password acquisition request to a terminal device, wherein the password acquisition request is used to indicate the terminal device to obtain first key information and a random code from a broadcasting device based on a first communication connection between the terminal device and the broadcasting device;
receiving password information sent by the terminal device, wherein the password information is obtained from the broadcasting device in a case where a check result obtained by the terminal device by checking a first check code and a second check code indicates that check is passed, the first check code is obtained by the terminal device based on the first key information and the random code, and the second check code is obtained by the broadcasting device based on the first key information and the random code; and
decrypting broadcast audio received from the broadcasting device based on the password information to obtain audio to be played.

There is provided a data processing apparatus, including:
a first acquisition module configured to, in a case where a password acquisition request sent by a listening device is received, acquire first key information and a random code from a broadcasting device based on a first communication connection with the broadcasting device;
a computation module configured to obtain a second check code based on the first key information and the random code;
a check module configured to check a first check code acquired from the broadcasting device and the second check code to obtain a check result, wherein the first check code is obtained by the broadcasting device based on the first key information and the random code;
a second acquisition module configured to, in a case where the check result indicates that check is passed, acquiring password information from the broadcasting device; and
a sending module configured to send the password information to the listening device, wherein the password information is used for the listening device to decrypt broadcast audio received from the broadcasting device.

In some embodiments, the apparatus further includes a module configured to:
in the case where the check result indicates that the check is passed, generate a temporary key;
encrypt the temporary key based on the first key information to obtain second key information;
send the second key information to the broadcasting device;
receive encrypted information obtained by the broadcasting device based on the first key information and the second key information; and
decrypt the encrypted information to obtain the password information.

In some embodiments, the apparatus further includes a module configured to:
in a case where the check result indicates that the check fails, send a connection rejection message to the broadcasting device;
receive a disconnection message which is sent by the broadcasting device based on the first communication connection; and
based on the disconnection message, disconnect the first communication connection.

In some embodiments, the apparatus further includes a module configured to:
in a case where a communication connection request sent by the listening device is received, establish a second communication connection with the listening device;
receive a device selection request sent by the listening device based on the second communication connection; and
based on the device selection request, determine a broadcasting device selected by the listening device for listening.

In some embodiments, the apparatus further includes a module configured to:
send a temporary communication connection request to the broadcasting device;
receive a temporary connection confirmation message which is sent by the broadcasting device after receiving the temporary communication connection request, and establishing the first communication connection with the broadcasting device; and
in a case where the password information is successfully obtained, disconnect the first communication connection.

In some embodiments, the apparatus further includes a module configured to:
send a key acquisition request to the broadcasting device based on the first communication connection; and
receive the first key information and the random code sent by the broadcasting device, wherein the first key information includes a public key of the broadcasting device, and the random code is generated by the broadcasting information based on the key acquisition request.

In some embodiments, the apparatus further includes a module configured to:
in a case where the check result is obtained, output prompt information corresponding to the check result through a display interface;
in a case where a confirmation operation acting on the prompt information is detected, determine that the check is passed; and
in a case where a rejection operation acting on the prompt information is detected, determine that the check fails.

There is further provided a data processing apparatus, including:
a first sending module configured to, based on a first communication connection with a terminal device that receives a password acquisition request from a listening device, send first key information and a random code to the terminal device;
a computation module configured to obtain a first check code based on the first key information and the random code, and sending the first check code to the terminal device;
a second sending module configured to, in a case where a check result obtained by the terminal device by checking the first check code and a second check code indicates that check is passed, send password information to the terminal device, so that the terminal device sends the password information to the listening device, wherein the second check code is obtained by the terminal device based on the first key information and the random code, and the password information is used for the listening device to decrypt broadcast audio received from a broadcasting device.

In some embodiments, the apparatus further includes a module configured to:
in a case where the check result indicates that the check is passed, receive second key information sent by the terminal device;
encrypt the password information based on the first key information and the second key information to obtain encrypted information; and
send the encrypted information to the terminal device so that the terminal device decrypts the encrypted information to obtain the password information.

In some embodiments, the apparatus further includes a module configured to:
in a case where the check result indicates that the check fails, receive a connection rejection message sent by the terminal device;
send a disconnection message to the terminal device based on the first communication connection; and
based on the disconnection message, disconnect the first communication connection.

In some embodiments, the apparatus further includes a module configured to:
in a case where a temporary communication connection request sent by the terminal device is received, send a temporary connection confirmation message to the terminal device;
wherein the temporary connection confirmation message is used to indicate the terminal device to establish the first communication connection with the broadcasting device; and
in a case where the password information is sent successfully, disconnect the first communication connection.

In some embodiments, the apparatus further includes a module configured to:
receive a key acquisition request sent by the terminal device based on the first communication connection; and
send the first key information and the random code to the terminal device based on the first communication connection, wherein the first key information includes a public key of the broadcasting device, and the random code is generated based on the key acquisition request.

There is further provided a data processing apparatus, including:
a sending module configured to send a password acquisition request to a terminal device, wherein the password acquisition request is used to indicate the terminal device to obtain first key information and a random code from a broadcasting device based on a first communication connection between the terminal device and the broadcasting device;
a receiving module configured to receive password information sent by the terminal device, wherein the password information is obtained from the broadcasting device in a case where a check result obtained by the terminal device by checking a first check code and a second check code indicates that check is passed, the first check code is obtained by the terminal device based on the first key information and the random code, and the second check code is obtained by the broadcasting device based on the first key information and the random code; and
a decryption module configured to decrypt broadcast audio received from the broadcasting device based on the password information to obtain audio to be played.

The technical solutions provided by the embodiments of the present disclosure may have the following beneficial effects:

In the data processing method proposed in the embodiments of the present disclosure, in a case where a password acquisition request sent by a listening device is received, first key information and a random code are acquired from a broadcasting device based on a first communication connection with the broadcasting device. A second check code is obtained based on the first key information and the random code. The first check code acquired from the broadcasting device and the second check code are checked to obtain a check result. The first check code is obtained by the broadcasting device based on the first key information and the random code. In a case where the check result indicates that the check is passed, password information is acquired from the broadcasting device. The password information is sent to the listening device. The password information is used for the listening device to decrypt broadcast audio received from the broadcasting device.

That is to say, when the password acquisition request is received from the listening device, the first key information and the random code are obtained from the broadcasting device through the established first communication connection. Then, the second check code is generated using the first key information and the random code, and the second check code is compared with the first check code provided by the broadcasting device, and the broadcasting device calculates the first check code also based on the first key information and the random code. If the comparison result shows that the two are consistent, that is, the check is passed, the password information is obtained from the broadcasting device and is forwarded to the listening device. The public key of the broadcasting device and the random code can be obtained through the first communication connection, and the password information of the broadcasting device can be obtained based on the public key and the random code, and then the password information is sent to the listening device. The method does not need a user to manually enter the password information, simplifying the user operation and improving the user experience.

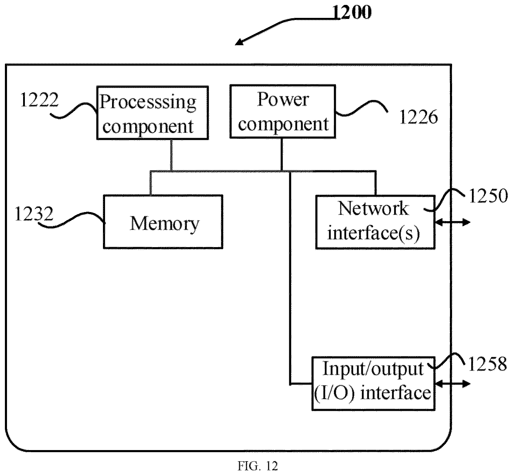

FIG. 12 is a block diagram showing an apparatus 1200 for data processing according to an example embodiment. For example, the apparatus 1200 may be provided as a server. Referring to FIG. 12, the apparatus 1200 includes a processing component 1222 that further includes one or more processors, and memory resources represented by a memory 1232 for storing instructions executable by the processing component 1222, such as application programs. The application programs stored in the memory 1232 may include one or more modules each corresponding to a set of instructions. Further, the processing component 1222 is configured to execute the instructions to perform any of the above described data processing methods. For example, the method includes:
in a case where a password acquisition request sent by a listening device is received, acquiring first key information and a random code from a broadcasting device based on a first communication connection with the broadcasting device;
obtaining a second check code based on the first key information and the random code;
checking a first check code acquired from the broadcasting device and the second check code to obtain a check result, wherein the first check code is obtained by the broadcasting device based on the first key information and the random code;
in a case where the check result indicates that check is passed, acquiring password information from the broadcasting device; and
sending the password information to the listening device, wherein the password information is used for the listening device to decrypt broadcast audio received from the broadcasting device.

The apparatus 1200 may also include a power component 1226 configured to perform power management of the apparatus 1200, wired or wireless network interface(s) 1250 configured to connect the apparatus 1200 to a network, and an input/output (I/O) interface 1258. The apparatus 1200 may operate based on an operating system stored in the memory 1232, such as Windows ServerTM, Mac OS XTM, UnixTM, LinuxTM, FreeBSDTM, or the like.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art. It is intended that the specification and examples be considered as exemplary only, with a true scope of the disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A data processing method, comprising:
in a case where a password acquisition request sent by a listening device is received, acquiring (101) first key information and a random code from a broadcasting device based on a first communication connection with the broadcasting device;
obtaining (102) a second check code based on the first key information and the random code;
checking (103) a first check code acquired from the broadcasting device and the second check code to obtain a check result, wherein the first check code is obtained by the broadcasting device based on the first key information and the random code;
in a case where the check result indicates that check is passed, acquiring (104) password information from the broadcasting device; and
sending (105) the password information to the listening device, wherein the password information is used for the listening device to decrypt broadcast audio received from the broadcasting device.

2. The method according to claim 1, wherein acquiring the password information from the broadcasting device in a case where the check result indicates that check is passed comprises:
in the case where the check result indicates that the check is passed, generating (607) a temporary key;
encrypting (608) the temporary key based on the first key information to obtain second key information;
sending the second key information to the broadcasting device;
receiving encrypted information obtained by the broadcasting device based on the first key information and the second key information; and
decrypting (611) the encrypted information to obtain the password information.

3. The method according to claim 1 or 2, further comprising:
in a case where the check result indicates that the check fails, sending (707) a connection rejection message to the broadcasting device;
receiving (708) a disconnection message which is sent by the broadcasting device based on the first communication connection; and
based on the disconnection message, disconnecting the first communication connection.

4. The method according to any one of the preceding claims, further comprising:
in a case where a communication connection request sent by the listening device is received, establishing a second communication connection with the listening device;
receiving a device selection request sent by the listening device based on the second communication connection; and
based on the device selection request, determining a broadcasting device selected by the listening device for listening.

5. The method according to any one of the preceding claims, further comprising:
sending a temporary communication connection request to the broadcasting device;
receiving a temporary connection confirmation message which is sent by the broadcasting device after receiving the temporary communication connection request, and establishing the first communication connection with the broadcasting device; and
in a case where the password information is successfully obtained, disconnecting the first communication connection.

6. The method according to any one of the preceding claims , wherein acquiring the first key information and the random code from the broadcasting device based on the first communication connection comprises:
sending a key acquisition request to the broadcasting device based on the first communication connection; and
receiving the first key information and the random code sent by the broadcasting device, wherein the first key information comprises a public key of the broadcasting device, and the random code is generated by the broadcasting information based on the key acquisition request.

7. The method according to any one of the preceding claims , further comprising:
in a case where the check result is obtained, outputting prompt information corresponding to the check result through a display interface;
in a case where a confirmation operation acting on the prompt information is detected, determining that the check is passed; and
in a case where a rejection operation acting on the prompt information is detected, determining that the check fails.

8. A data processing method, comprising:
based on a first communication connection with a terminal device that receives a password acquisition request from a listening device, sending (201) first key information and a random code to the terminal device;
obtaining (202) a first check code based on the first key information and the random code, and sending the first check code to the terminal device;
in a case where a check result obtained by the terminal device by checking the first check code and a second check code indicates that check is passed, sending (203) password information to the terminal device, so that the terminal device sends the password information to the listening device, wherein the second check code is obtained by the terminal device based on the first key information and the random code, and the password information is used for the listening device to decrypt broadcast audio received from a broadcasting device.

9. The method according to claim 8, wherein sending password information to the terminal device in the case where the check result obtained by the terminal device by checking the first check code and the second check code indicates that check is passed comprises:
in a case where the check result indicates that the check is passed, receiving second key information sent by the terminal device;
encrypting the password information based on the first key information and the second key information to obtain encrypted information; and
sending the encrypted information to the terminal device so that the terminal device decrypts the encrypted information to obtain the password information; or
in a case where the check result indicates that the check fails, receiving a connection rejection message sent by the terminal device;
sending a disconnection message to the terminal device based on the first communication connection; and
based on the disconnection message, disconnecting the first communication connection.

10. The method according to claim 8 or 9, further comprising:
in a case where a temporary communication connection request sent by the terminal device is received, sending a temporary connection confirmation message to the terminal device;
wherein the temporary connection confirmation message is used to indicate the terminal device to establish the first communication connection with the broadcasting device; and
in a case where the password information is sent successfully, disconnecting the first communication connection.

11. The method according to any one of the claims 8 to 10, wherein sending the first key information and the random code to the terminal device comprises:
receiving a key acquisition request sent by the terminal device based on the first communication connection; and
sending the first key information and the random code to the terminal device based on the first communication connection, wherein the first key information comprises a public key of the broadcasting device, and the random code is generated based on the key acquisition request.

12. A data processing method, comprising:
sending (301) a password acquisition request to a terminal device, wherein the password acquisition request is used to indicate the terminal device to obtain first key information and a random code from a broadcasting device based on a first communication connection between the terminal device and the broadcasting device;
receiving (302) password information sent by the terminal device, wherein the password information is obtained from the broadcasting device in a case where a check result obtained by the terminal device by checking a first check code and a second check code indicates that check is passed, the first check code is obtained by the terminal device based on the first key information and the random code, and the second check code is obtained by the broadcasting device based on the first key information and the random code; and
decrypting (303) broadcast audio received from the broadcasting device based on the password information to obtain audio to be played.

13. A data processing apparatus, comprising:
a first acquisition module (801) configured to, in a case where a password acquisition request sent by a listening device is received, acquire first key information and a random code from a broadcasting device based on a first communication connection with the broadcasting device;
a computation module (802) configured to obtain a second check code based on the first key information and the random code;
a check module (803) configured to check a first check code acquired from the broadcasting device and the second check code to obtain a check result, wherein the first check code is obtained by the broadcasting device based on the first key information and the random code;
a second acquisition module (804) configured to, in a case where the check result indicates that check is passed, acquiring password information from the broadcasting device; and
a sending module (805) configured to send the password information to the listening device, wherein the password information is used for the listening device to decrypt broadcast audio received from the broadcasting device.

14. A data processing apparatus, comprising:
a first sending module (901) configured to, based on a first communication connection with a terminal device that receives a password acquisition request from a listening device, send first key information and a random code to the terminal device;
a computation module (902) configured to obtain a first check code based on the first key information and the random code, and sending the first check code to the terminal device;
a second sending module (903) configured to, in a case where a check result obtained by the terminal device by checking the first check code and a second check code indicates that check is passed, send password information to the terminal device, so that the terminal device sends the password information to the listening device, wherein the second check code is obtained by the terminal device based on the first key information and the random code, and the password information is used for the listening device to decrypt broadcast audio received from a broadcasting device.

15. A data processing apparatus, comprising:
a sending module (1001) configured to send a password acquisition request to a terminal device, wherein the password acquisition request is used to indicate the terminal device to obtain first key information and a random code from a broadcasting device based on a first communication connection between the terminal device and the broadcasting device;
a receiving module (1002) configured to receive password information sent by the terminal device, wherein the password information is obtained from the broadcasting device in a case where a check result obtained by the terminal device by checking a first check code and a second check code indicates that check is passed, the first check code is obtained by the terminal device based on the first key information and the random code, and the second check code is obtained by the broadcasting device based on the first key information and the random code; and
a decryption module (1003) configured to decrypt broadcast audio received from the broadcasting device based on the password information to obtain audio to be played.

## Amended claims

### Amended claims in accordance with Rule 137(2) EPC.

1. A data processing method, comprising:
in a case where a password acquisition request sent by a listening device is received, acquiring (101), by a terminal device, first key information and a random code from a broadcasting device based on a first communication connection with the broadcasting device;
obtaining (102), by the terminal device, a second check code based on the first key information and the random code;
checking (103), by the terminal device, a first check code acquired from the broadcasting device and the second check code to obtain a check result, wherein the first check code is obtained by the broadcasting device based on the first key information and the random code;
in a case where the check result indicates that check is passed, acquiring (104), by the terminal device, password information from the broadcasting device; and
sending (105), by the terminal device, the password information to the listening device, wherein the password information is used for the listening device to decrypt broadcast audio received from the broadcasting device;
wherein acquiring, by the terminal device, the password information from the broadcasting device in a case where the check result indicates that check is passed comprises:
when the check result indicates that the check is passed, generating (607), by the terminal device, a temporary key;
encrypting (608) , by the terminal device, the temporary key based on the first key information to obtain second key information;
sending, by the terminal device, the second key information to the broadcasting device;
receiving, by the terminal device, encrypted information obtained by the broadcasting device based on the first key information and the second key information; and
decrypting (611) , by the terminal device, the encrypted information to obtain the password information.

2. The method according to claim 1, further comprising:
when the check result indicates that the check fails, sending (707) , by the terminal device, a connection rejection message to the broadcasting device;
receiving (708) , by the terminal device, a disconnection message which is sent by the broadcasting device based on the first communication connection; and
based on the disconnection message, disconnecting, by the terminal device, the first communication connection.

3. The method according to any one of the preceding claims, further comprising:
in a case where a communication connection request sent by the listening device is received, establishing, by the terminal device, a second communication connection with the listening device;
receiving, by the terminal device, a device selection request sent by the listening device based on the second communication connection; and
based on the device selection request, determining, by the terminal device, a broadcasting device selected by the listening device for listening.

4. The method according to any one of the preceding claims, before the password acquisition request is received, the method further comprising:
sending, by the terminal device, a temporary communication connection request to the broadcasting device;
receiving, by the terminal device, a temporary connection confirmation message which is sent by the broadcasting device after receiving the temporary communication connection request, and establishing the first communication connection with the broadcasting device; and
in a case where the password information is successfully obtained, disconnecting, by the terminal device, the first communication connection.

5. The method according to any one of the preceding claims, wherein acquiring the first key information and the random code from the broadcasting device based on the first communication connection comprises:
sending, by the terminal device, a key acquisition request to the broadcasting device based on the first communication connection; and
receiving, by the terminal device, the first key information and the random code sent by the broadcasting device, wherein the first key information comprises a public key of the broadcasting device, and the random code is generated by the broadcasting information based on the key acquisition request.

6. The method according to any one of the preceding claims, further comprising:
in a case where the check result is obtained, outputting, by the terminal device, prompt information corresponding to the check result through a display interface;
in a case where a confirmation operation acting on the prompt information is detected, determining, by the terminal device, that the check is passed; and
in a case where a rejection operation acting on the prompt information is detected, determining, by the terminal device, that the check fails.

7. A data processing method, comprising:
based on a first communication connection with a terminal device that receives a password acquisition request from a listening device, sending (201), by a broadcasting device, first key information and a random code to the terminal device;
obtaining (202) , by the broadcasting device, a first check code based on the first key information and the random code, and sending the first check code to the terminal device;
in a case where a check result obtained by the terminal device by checking the first check code and a second check code indicates that check is passed, sending (203) , by the broadcasting device, password information to the terminal device, so that the terminal device sends the password information to the listening device, wherein the second check code is obtained by the terminal device based on the first key information and the random code, and the password information is used for the listening device to decrypt broadcast audio received from a broadcasting device;
wherein sending password information to the terminal device in the case where the check result obtained by the terminal device by checking the first check code and the second check code indicates that check is passed comprises:
in a case where the check result indicates that the check is passed, receiving, by the broadcasting device, second key information sent by the terminal device;
encrypting, by the broadcasting device, the password information based on the first key information and the second key information to obtain encrypted information; and
sending, by the broadcasting device, the encrypted information to the terminal device so that the terminal device decrypts the encrypted information to obtain the password information; or
in a case where the check result indicates that the check fails, receiving, by the broadcasting device, a connection rejection message sent by the terminal device;
sending, by the broadcasting device, a disconnection message to the terminal device based on the first communication connection; and
based on the disconnection message, disconnecting, by the broadcasting device, the first communication connection.

8. The method according to claim 7, before the password acquisition request is received, the method further comprising:
in a case where a temporary communication connection request sent by the terminal device is received, sending a temporary connection confirmation message to the terminal device;
wherein the temporary connection confirmation message is used to indicate the terminal device to establish the first communication connection with the broadcasting device; and
in a case where the password information is sent successfully, disconnecting the first communication connection.

9. The method according to any one of the claims 7 to 8, wherein sending the first key information and the random code to the terminal device comprises:
receiving a key acquisition request sent by the terminal device based on the first communication connection; and
sending the first key information and the random code to the terminal device based on the first communication connection, wherein the first key information comprises a public key of the broadcasting device, and the random code is generated based on the key acquisition request.

10. A data processing method, comprising:
sending (301), by a listening device, a password acquisition request to a terminal device, wherein the password acquisition request is used to indicate the terminal device to obtain first key information and a random code from a broadcasting device based on a first communication connection between the terminal device and the broadcasting device;
receiving (302), by the listening device, password information sent by the terminal device, wherein the password information is obtained from the broadcasting device in a case where a check result obtained by the terminal device by checking a first check code and a second check code indicates that check is passed, the first check code is obtained by the terminal device based on the first key information and the random code, and the second check code is obtained by the broadcasting device based on the first key information and the random code, wherein in the case where the check result indicates that the check is passed, the terminal device generates a temporary key, encrypts the temporary key based on the first key information to obtain second key information, sends the second key information to the broadcasting device, receive encrypted information obtained by the broadcasting device based on the first key information and the second key information, and decrypt the encrypted information to obtain the password information; and
decrypting (303) , by the listening device, broadcast audio received from the broadcasting device based on the password information to obtain audio to be played.

11. A terminal device, comprising:
a first acquisition module (801) configured to, in a case where a password acquisition request sent by a listening device is received, acquire first key information and a random code from a broadcasting device based on a first communication connection with the broadcasting device;
a computation module (802) configured to obtain a second check code based on the first key information and the random code;
a check module (803) configured to check a first check code acquired from the broadcasting device and the second check code to obtain a check result, wherein the first check code is obtained by the broadcasting device based on the first key information and the random code;
a second acquisition module (804) configured to, in a case where the check result indicates that check is passed, acquiring password information from the broadcasting device; and
a sending module (805) configured to send the password information to the listening device, wherein the password information is used for the listening device to decrypt broadcast audio received from the broadcasting device;
wherein the terminal device further includes a module configured to:
in the case where the check result indicates that the check is passed, generate a temporary key;
encrypt the temporary key based on the first key information to obtain second key information;
send the second key information to the broadcasting device;
receive encrypted information obtained by the broadcasting device based on the first key information and the second key information; and
decrypt the encrypted information to obtain the password information.

12. A broadcasting device, comprising:
a first sending module (901) configured to, based on a first communication connection with a terminal device that receives a password acquisition request from a listening device, send first key information and a random code to the terminal device;
a computation module (902) configured to obtain a first check code based on the first key information and the random code, and sending the first check code to the terminal device;
a second sending module (903) configured to, in a case where a check result obtained by the terminal device by checking the first check code and a second check code indicates that check is passed, send password information to the terminal device, so that the terminal device sends the password information to the listening device, wherein the second check code is obtained by the terminal device based on the first key information and the random code, and the password information is used for the listening device to decrypt broadcast audio received from a broadcasting device;
wherein the broadcasting device further comprises a module configured to:
when the check result indicates that the check is passed, receive second key information sent by the terminal device;
encrypt the password information based on the first key information and the second key information to obtain encrypted information; and
send the encrypted information to the terminal device so that the terminal device decrypts the encrypted information to obtain the password information; or
in a case where the check result indicates that the check fails, receiving, by the broadcasting device, a connection rejection message sent by the terminal device;
sending, by the broadcasting device, a disconnection message to the terminal device based on the first communication connection; and
based on the disconnection message, disconnecting, by the broadcasting device, the first communication connection.

13. A listening device, comprising:
a sending module (1001) configured to send a password acquisition request to a terminal device, wherein the password acquisition request is used to indicate the terminal device to obtain first key information and a random code from a broadcasting device based on a first communication connection between the terminal device and the broadcasting device;
a receiving module (1002) configured to receive password information sent by the terminal device, wherein the password information is obtained from the broadcasting device in a case where a check result obtained by the terminal device by checking a first check code and a second check code indicates that check is passed, the first check code is obtained by the terminal device based on the first key information and the random code, and the second check code is obtained by the broadcasting device based on the first key information and the random code, wherein in the case where the check result indicates that the check is passed, the terminal device generates a temporary key, encrypts the temporary key based on the first key information to obtain second key information, sends the second key information to the broadcasting device, receive encrypted information obtained by the broadcasting device based on the first key information and the second key information, and decrypt the encrypted information to obtain the password information; and
a decryption module (1003) configured to decrypt broadcast audio received from the broadcasting device based on the password information to obtain audio to be played.
